# EUROPÄISCHE PATENTSCHRIFT

(11) **EP 1 797 568 B1**
(45) Veröffentlichungstag und Bekanntmachung des Hinweises auf die Patenterteilung: **11.08.2010**
(21) Anmeldenummer: 05791313.9
(22) Anmeldetag: 27.09.2005
(51) Int. Cl.: G01Q 70/04

(54) **NANOMANIPULATOR ZUM ANALYSIEREN ODER BEARBEITEN VON OBJEKTEN**
NANOMANIPULATOR USED FOR ANALYZING OR MACHINING OBJECTS
NANOMANIPULATEUR SERVANT A ANALYSER OU A USINER DES OBJETS

(30) Priorität: 09.10.2004 DE 102004049371
(43) Veröffentlichungstag der Anmeldung: 20.06.2007
(73) Patentinhaber: Forschungszentrum Jülich GmbH, 52425 Jülich (DE)
(72) Erfinder: VOIGTLÄNDER, Bert, 52428 Jülich (DE); COENEN, Franz-Peter, 52428 Jülich (DE)
(86) Internationale Anmeldenummer: PCT/DE2005/001702
(87) Internationale Veröffentlichungsnummer: WO 2006/039887

(56) Entgegenhaltungen:
- WO-A-01/09965
- DE-A1- 19 715 226
- HUG HANS J ET AL: "A low temperature ultrahigh vaccum scanning force microscope" September 1999 (1999-09), REVIEW OF SCIENTIFIC INSTRUMENTS, AMERICAN INSTITUTE OF PHYSICS, US, PAGE(S) 3625-3640 , XP012037649 ISSN: 0034-6748 Abbildungen 3-5 Absätze [0002] - [0004]
- SHIRAKI I ET AL: "Independently driven four-tip probes for conductivity measurements in ultrahigh vacuum" SURFACE SCIENCE ELSEVIER NETHERLANDS, Bd. 493, Nr. 1-3, 1. November 2001 (2001-11-01), Seiten 633-643, XP002361818 ISSN: 0039-6028 in der Anmeldung erwähnt
- PERTAYA N. ET AL: "On the stability of Besocke-type scanners" REVIEW OF SCIENTIFIC INSTRUMENTS, vol. 75, no. 8, 1 August 2004 (2004-08-01) , pages 2608-2612, AIP - USA

## Beschreibung

Die Erfindung betrifft einen Nanomanipulator zum Analysieren oder Bearbeiten von Objekten.

Rastertunnelmikroskope (STM) und Rasterkraftmikroskope (SFM, AFM) werden zur Charakterisierung der Oberflächenmorphologie in Forschung, Lehre und Industrie eingesetzt.

Das Grundprinzip des Rastertunnelmikroskops und des Rasterkraftmikroskops beruht auf dem Abtasten der Oberfläche durch eine feine Spitze oder Abtastnadel, welche an einem hohlzylinderartigen piezoelektrischen Bewegungselement befestigt ist. Im Falle eines Rastertunnelmikroskops wird der Strom zwischen Spitze und Probe entlang der Oberfläche einer zu analysierenden Probe gemessen.

Im Falle eines Rasterkraftmikroskops ist an Stelle der Abtastnadel ein Hebel, oder sogenannter Cantilever befestigt. Als Messgröße dient in diesem Fall die Kraft zwischen Probe und Cantilever.

Aus der Druckschrift DE 3610540 C2 ist ein Mikromanipulator zur Mikrobewegung von Objekten in X-, Y- und Z-Richtung bekannt, wobei das Objekt auf mindestens drei hohlzylinderartigen piezoelektrischen Bewegungselementen gelagert ist. Diese Bewegungselemente weisen einen geschlossenen, elektrisch leitfähigen inneren Belag, sowie mehrere gegeneinander isolierte Teilbeläge an der Außenfläche auf. Durch Anlegen einer elektrischen Spannung zwischen einzelnen Teilbelägen und dem inneren Belag, wird je nach Polarität eine Verbiegung bzw. Deformation der hohlzylinderartigen, piezoelektrischen Bewegungselemente in X-, Y- und Z-Richtung herbeigeführt.

Diese Bewegungen sind sehr genau und werden im Folgenden Feinbewegungen genannt. Es können kontinuierliche Bewegungen mit einer Genauigkeit von bis zu einem Tausendstel Nanometer ausgeführt werden. Andererseits kann durch die Deformation der Piezoelemente nur eine Bewegung in einem Bereich von wenigen Mikrometern erfolgen.

Zur Grobbewegung eines Objekts oder eines Objekthalters wird ein Trägheitsantrieb verwendet.

Bei entsprechender Ansteuerung der Bewegungselemente, zum Beispiel durch einen Sägezahnimpuls, wird eine Lageveränderung des zu untersuchenden Objekts oder Objekthalters auf Grund der Trägheit des Objekts bzw. des Objekthalters vorgenommen. Diese Bewegung wird im Folgenden Grobbewegung genannt und überspannt den Bereich von Nanometern bis Millimetern. Die Grobbewegung erfolgt nicht kontinuierlich wie die Feinbewegung, sondern in Schritten im Nanometerbereich, deren Weite durch die Amplitude des Sägezahnpulses bestimmt wird. Durch Grobbewegungen auf Grundlage des Trägheitsantriebs sind Translationsbewegungen in X- und Y-Richtung zur Verstellung der Lage eines Objekts oder Objekthalters relativ zu einer zu untersuchenden Probe möglich. Unter Mikrobewegung werden nachstehend sowohl Fein- als auch Grobbewegungen umfasst.

Aus der Druckschrift DE 38 44 659 C2 ist bekannt, dass die Bewegungselemente in axialer, vertikaler Ausrichtung des Nanomanipulators eine schief oder schraubenförmig verlaufende Stützebene abstützen. Die schraubenförmig verlaufende Stützebene kann in mehrere gleichartig gestaltete Abschnitte aufgeteilt sein, wobei zumindest ein hohlzylinderartiges Bewegungselement jeden Abschnitt stützt.

Bei einer geeigneten Ansteuerung der hohlzylinderartigen Bewegungselemente wird die schraubenförmig verlaufende Stützebene in eine Rotation versetzt. Es ergibt sich eine Grobbewegung der Bearbeitungs- und Analyse-Ebene auch in axialer Richtung (Z-Richtung). Die Verschiebung geht dabei weit über das Maß hinaus, das durch Anlegen einer elektrischen Spannung am Piezoelement selbst erzielbar wäre. Durch dieses Verfahren ist z. B. eine Grobannäherung einer Spitze oder Abtastnadel an die Probe möglich.

Bei einer anderen geeigneten Ansteuerung bzw. Bewegung der Bewegungselemente kann die Stützebene eine horizontale Grobbewegung in X- bzw. Y- Richtung ausführen. Ist das Objekt durch die Grobbewegungen in X-, Y- und Z-Richtung in eine geeignete Position gebracht, so kann eine weitere, genauere Bewegung (Feinbewegung) durch die Deformation eines hohlzylinderartigen Piezoelementes mit Abtastnadel erfolgen.

Mikromanipulatoren werden mit Abtastnadeln zum oben genannten Zweck ausgestattet, um damit die Oberfläche eines Objekts bzw. einer Probe zu analysieren oder zu bearbeiten. Die Abtastnadel ist an einem hohlzylinderartigen Bewegungselement befestigt. Dieses wird auf Grundlage des piezoelektrischen Effekts deformiert bzw. verbogen, wodurch es zur gewünschten Relativbewegung zwischen Abtastnadel und Objekt kommt (Feinbewegung).

Durch den Übergang von der Mikroelektronik zur Nanoelektronik sind Messungen der elektronischen Eigenschaften und des Ladungstransports durch Nanostrukturen erwünscht.

Aus der Druckschrift Shiraki et al. (I. Shiraki, F. Tanabe, R. Hobara, T. Nagao and S. Hasegawa, 2001. Independently driven four-tip probes for conductivity measurements in ultrahigh vacuum. Surf. Sci. 493, 633-643) ist ein vier Sonden-System, welches in einem UHV-SEM angeordnet ist, bekannt. Jede Sonde stellt ein STM dar. Zur Kontrolle der Manipulation der Sonden wird das SEM verwendet. Mit diesem lassen sich die Sonden lokalisieren. Durch eine Grobpositionierung werden die Sonden, bis auf wenige µm, einander genähert. Hohlzylinderartige Bewegungselemente mit je fünf Elektroden erlauben eine hohe Positioniergenauigkeit der Sonden und bewegen diese im Nanometerbereich, wodurch eine Feinpositionierung der Sonden durchgeführt wird. Elektrische Eigenschaften von Bauelementen lassen sich durch Nutzung von z. B. vier Sonden bzw. Abtastnadeln analysieren.

Ebenfalls aus dem Stand der Technik bekannt ist eine UHV-Nanoprobe. Auch hiermit lässt sich eine Mehrpunktmessung z. B. an Halbleiter und Biomolekularen Bauelementen bis hinab in den Nanometerbereich durchführen. Dafür werden vier Abtastnadeln bis auf einen Abstand von etwa 600 Nanometer aneinander herangeführt und sodann die Leitfähigkeit zwischen den Abtastnadeln unabhängig voneinander im Bauelement gemessen. Die Abtastnadeln sind voneinander unabhängig über entsprechende Grob- und Feinmanipulation positionierbar.

Aus Pertaya et al. (N. Pertaya, K.F. Braun und K.H. Rieder (2004). "On the stability of Besocke- type scanners" Review of scientific instruments, Volume 75, Number 8, page 2608- 2612) ist ein weiterer sogenannter Besocke- typ Scanner bekannt, bei dem Scherpiezoelemente zum Einsatz kommen.

Nachteilig ist bei allen bisher bekannten Manipulatoren ein aufwändiger Mechanismus zur Dämpfung von Vibrationen unabdingbar.
Vibrationen aus der Umgebung des Manipulators stören die Positionierbarkeit der Abtastnadeln ebenso wie deren Lokalisierung mittels SEM, TEM oder vergleichbaren Methoden. Beispielhaft müssen bei der Positionierung der Sonden Schwingungen, die von Lüftungsanlagen ausgehen, ausgeglichen bzw. gedämpft werden.

Es wurde vorgeschlagen, die Spitzen, den Objektträger und alle weiteren Vorrichtungen, die zur Positionierung und Lokalisierung der Spitzen bzw. der Probe nötig sind, auf einer luftgedämpften Bühne anzuordnen. Ebenfalls aus dem Stand der Technik bekannt, sind pneumatische Auto-Schwingungsdämpfer. Je geringer der Abstand der Abtastnadeln zueinander und/oder zu der Probe ist, desto größer ist der Aufwand zur Unterdrückung derartiger Vibrationen. Die Manipulatoren werden dadurch teuer.

Aufgabe der Erfindung ist es, einen Nanomanipulator bereit zu stellen, welcher eine geringere Vibrationsanfälligkeit aufweist, als dies aus dem Stand der Technik bekannt ist.

Die Aufgabe wird durch einen Nanomanipulator gemäß Hauptanspruch bzw. Nebenanspruch gelöst. Vorteilhafte Ausgestaltungen ergeben sich aus den darauf rückbezogenen Patentansprüchen.

Der Nanomanipulator bewegt ein Objekt relativ zu einer Analyse- oder Bearbeitungsposition. Er weist mehrere, das zu bewegende Objekt oder einen Objekthalter hierfür stützende, zur Ausführung von Bewegungen verstellbare Bewegungselemente auf, welche jeweils eine Auflagefläche für das zu bewegende Objekt oder den Objekthalter aufweisen. Die Bewegungselemente stützen senkrecht zur Symmetrieachse des Nanomanipulators mindestens zwei Stützebenen ab. Eine Stützebene ist Teil eines Objekthalters.

Der Nanomanipulator ist gekennzeichnet durch Bewegungselemente, welche jeweils mindestens ein Scherpiezoelement umfassen und die Stützebene bewegen. Die Bewegungselemente können neben Grobbewegungen auf Grundlage eines Trägheitsantriebs auch Feinbewegungen ausführen.
Der Aufbau des erfindungsgemäßen Nanomanipulators gestattet vorteilhaft mehr Freiheiten bei dessen Aufbau im Vergleich zu konventionellen Nanomanipulatoren.

Vorteilhaft wird der Nanomanipulator in Analysegerätschaften eingesetzt, wie z. B. in einem Elektronenmikroskop, Lichtmikroskop, einer Laseranordnung und so weiter.

Bevorzugt wird der Nanomanipulator in Mikroskopen eingesetzt. Der Nanomanipulator dient dabei als Objektträger für das zu untersuchende Objekt.

Bei Analysen im Nanometerbereich ist die Steifheit des Aufbaus des Nanomanipulators sehr wichtig.
Im Rahmen der Erfindung wurde erkannt, dass ein Nanomanipulator so aufgebaut sein muss, dass dieser höhere Eigenfrequenzen als die Vibrationen aus der Umgebung aufweist. Dies wird durch die Verwendung kleiner Bewegungselemente mit Scherpiezoelementen an Stelle dünner, hohlzylinderartiger Bewegungselemente erzielt. Höhere Eigenfrequenzen des Nanomanipulators bedeuten eine geringere Empfindlichkeit für externe Schwingungen und Vibrationen mit tieferer Frequenz. Dies führt im Effekt zu einer geringeren Empfindlichkeit des Nanomanipulators gegenüber Vibrationen von außen und zu einer besseren Auflösung bei der Abbildung, Bearbeitung und Analyse mit z. B. einem Rastertunnelmikroskop (STM).
Im Vergleich zu den aus dem Stand der Technik bekannten hohlzylinderartigen Bewegungselementen, ist die Summe der Eigenfrequenzen der in verschiedenen Stützebenen angeordneten Bewegungselemente mit Scherpiezoelementen höher, als die durch hohlzylinderartige Bewegungselemente erzielten und auch höher als die Vibrationsfrequenzen, die von außen auf den Nanomanipulator einwirken.

Bei vergleichsweise geringerer Höhe eines Nanomanipulators wird vorteilhaft bewirkt, dass der Nanomanipulator durch Scherpiezoelemente unanfälliger gegenüber von außen einwirkenden Vibrationen ist als dies bei Verwendung hohlzylinderartiger Bewegungselemente der Fall ist.

Besonders vorteilhaft wird durch die geringe Baugröße der Scherpiezoelemente umfassenden Bewegungselemente, im Vergleich zu bisher verwendeten hohlzylinderartigen Bewegungselementen, der Aufbau des Nanomanipulators kompakter gestaltet.
Typische Maße für hohlzylinderartige Bewegungselemente belaufen sich auf einen Durchmesser von etwa 3 mm und einer Höhe von etwa 15 mm. Im Vergleich hierzu weisen Scherpiezoelemente umfassende Bewegungselemente im vorliegenden Beispiel eine Fläche von nur 3 mm x 3mm und eine Höhe von etwa 4 Millimeter auf, wovon die Scherpiezoelemente nur etwa 2 mm der Höhe einnehmen.

Der Nanomanipulator kann verschiedene Sorten Scherpiezoelemente umfassen, die verschiedenartige Bewegungen gemäß des longitudinalen Schereffekts ausführen.

Die Scherpiezoelemente können eine Schichtenfolge aus einer isolierenden Keramik (Basisplatte), einer darauf angeordneten dünnen Kontaktschicht (zum Beispiel aus Tantal), und einer darauf angeordneten ersten piezoelektrisch verstellbare keramische Schicht aufweisen. Auf der letztgenannten Schicht ist eine Kontaktschicht aufgedampft. Auf dieser Kontaktschicht ist eine zweite piezoelektrisch verstellbare keramische Schicht angeordnet. Auf dieser wiederum ist eine weitere Kontaktschicht sowie eine zweite isolierende keramische

Schicht als Deckplatte angeordnet.
Die beiden piezoelektrisch verstellbaren keramischen Schichten sind in Bezug auf ihre Gitterstruktur orthogonal um 90 Grad zueinander versetzt angeordnet. Beide piezoelektrisch verstellbaren keramischen Schichten weisen Kontaktschichten an ihren oberen und unteren Grenzflächen auf, sind also von jeweils zwei Seiten kontaktierbar. Durch die 90 Grad Versetzung zueinander und durch geeignete Polarität der Spannung an den Kontaktschichten werden zielgerichtete Verformungen in X- und Y-Richtung gegenüber dem jeweils isolierenden ortsfesten Untergrund mittels longitudinalen Schereffekt ermöglicht. Durch Hinzufügen eines weiteren, beidseitig kontaktierten Piezoelementes zwischen Basis- und Deckplatte, dessen Bewegung senkrecht zur X-Y-Ebene des Nanomanipulators ausgerichtet ist, können auch Bewegungen in Z-Richtung ausgeführt werden.

In einer vorteilhaften Ausgestaltung der Erfindung weist der Nanomanipulator genau drei Bewegungselemente mit Scherpiezoelementen für jeweils eine Stützebene auf. Mit drei Bewegungselementen ist eine hinreichend sichere Auflage der Stützebene mittels einer DreiPunkt-Lagerung gewährleistet.

Jedes ein Scherpiezoelement umfassende Bewegungselement des Nanomanipulators kann eine insbesondere halbkugelförmige Auflagefläche für die Stützebene umfassen.

Die Bewegungselemente können in einer besonders vorteilhaften Ausgestaltung der Erfindung einen Magneten, insbesondere aus einem Selten-Erde-Material, umfassen. Der Magnet kann z. B. als Lagerung der halbkugelförmigen Auflagefläche, welche aus Stahl besteht, dienen. Sofern das Material der Stützebene z. B. als Teil in einem Objekthalter, oder eines anderen zu bewegenden Objekts aus einem magnetischen Material besteht, kann dieses besser an die halbkugelförmige Auflagefläche der Bewegungselemente gekoppelt werden. Auch diese Maßnahme für sich allein bewirkt, dass der Nanomanipulator unempfindlicher gegenüber Vibrationen von außen ist.

Die Magnete sind z. B. zwischen der halbkugelförmigen Auflagefläche und der zweiten isolierenden Schicht des Scherpiezoelements angeordnet. Isolierende Schicht, Magnet und halbkugelförmige Auflage sind fest miteinander verbunden.

Die verschiedenen Scherpiezoelemente für die Stützebene weisen regelmäßig Mittel zu einer voneinander unabhängigen Ansteuerung auf. Jedes Scherpiezoelement führt über die Ansteuerung Bewegungen in X-, Y- und/oder Z-Richtung aus.

Die Bewegungselemente sind auf Trägern des Nanomanipulators, gegebenenfalls in axial unterschiedlicher Höhe in angeordnet.

Die Stützebene ist Teil eines Objekthalters, Laufrings oder einer zu untersuchenden Probe. Im Falle eines Objekthalters kann an diesem mindestens eine Abtastnadel befestigt sein. Die Abtastnadel kann, muss aber nicht zwangsläufig über ein hohlzylinderartiges Bewegungselement an dem Objekthalter befestigt sein. Der Objekthalter hält das röhrenförmige Bewegungselement samt Abtastnadel.

Zumindest eine Stützebene weist eine Öffnung auf, die so bemessen ist, dass darin ein hohlzylinderartiges Bewegungselement und/ oder eine weitere Stützebene translatorisch bewegt werden kann.

Es ist in einer weiteren Ausgestaltung der Erfindung möglich, mehrere Stützebenen im Nanomanipulator anzuordnen und durch Scherpiezoelemente umfassende Bewegungselemente abzustützen und zu bewegen und dabei mehrere Stützebenen in Symmetrieachse übereinander anzuordnen und durch Scherpiezoelemente umfassende Bewegungselemente abzustützen und zu bewegen. Die Bewegungselemente sind dabei in unterschiedlicher Höhe der Symmetrieachse auf den Trägern angeordnet. Jeder Träger weist dann vorteilhaft Stellplätze in axial unterschiedlicher Höhe für die Bewegungselemente auf.

Die Bewegungselemente mit Scherpiezoelementen können in einer besonders vorteilhaften Ausgestaltung der Erfindung auch auf einer Stützebene zur Stützung und Bewegung einer weiteren Stützebene angeordnet sein.
In funktioneller Hinsicht werden auf diese Weise Bewegungen des Nanomanipulators besonders vorteilhaft voneinander entkoppelt.

In einer ganz besonders vorteilhaften Ausgestaltung der Erfindung ist in mindestens einer der Stützebenen eine Öffnung vorgesehen. In der Öffnung sind weitere Stützebenen angeordnet.
Dadurch wird besonders vorteilhaft der zur Verfügung stehende Raum im Nanomanipulator noch besser ausgenutzt und die Eigenfrequenz des Nanomanipulators weiter erhöht.

Auch ein im Nanomanipulator angeordneter Objekthalter mit einem röhrenförmigen Bewegungselement, an dem eine Abtastnadel starr befestigt ist, kann eine Stützebene mit Öffnung aufweisen, in der weitere Stützebenen angeordnet sind.

Die Abtastnadel kann über das hohlzylinderartige Bewegungselement starr an einem Objekthalter befestigt sein. Sie wird über die diesen stützenden Bewegungselemente relativ zu einer zu untersuchenden Probe bzw. Analyse- oder Bearbeitungsposition bewegt.

Die Bewegungselemente mit den Scherpiezoelementen stützen die Stützebene einer Halterung für das hohlzylinderartige Bewegungselement mit Abtastnadel ab. Dadurch wird erreicht, dass die Abtastnadel, wenngleich an einem hohlzylinderartigen Bewegungselement befestigt, dennoch über die Scherpiezoelemente unempfindlich gegenüber Vibrationen ist, da sie von der Umgebung über hohe Eigenfrequenzen der Scherpiezoelemente entkoppelt wird.

Das hohlzylinderartige Bewegungselement im Nanomanipulator ist vorteilhaft verformbar. Ein Objekthalter, welcher über ein hohlzylinderartiges Bewegungselement mit der Abtastnadel starr verbunden ist, wird durch eine Ansteuerung der den Objekthalter stützenden Scherpiezoelemente mittels Trägheitsantrieb bewegt (Grobbewegung) und relativ zur Analyse- oder Bearbeitungsposition positioniert. Zur Feinpositionierung bzw. Bewegung wird das hohlzylinderartige Bewegungselement angesteuert und verformt.

Es ist in einer anderen Ausgestaltung der Erfindung auch möglich, das hohlzylinderartige Bewegungselement mit Abtastnadel am oder im Boden eines Nanomanipulators ortsfest zu befestigen und eine zu untersuchende Probe über die Scherpiezoelemente umfassenden Bewegungselemente hierüber hinweg zu bewegen.

Auf das Prinzip der Relativbewegung eines Objekt, z. B. einer Abtastnadel, welche an einem hohlzylinderartigen Bewegungselement befestigt ist, relativ zu einer zu untersuchenden Probe, sowie der hierzu synchronen und gleichzeitigen Verformung der den Objekthalter oder die Probe stützenden Bewegungselemente, wird auf die Druckschrift DE 3610540 C2 verwiesen.

In einer weiteren vorteilhaften Ausgestaltung der Erfindung, weist der Nanomanipulator mindestens eine schief verlaufende Stützebene auf. Eine schief verlaufende Stützebene im Nanomanipulator dient einer Grobbewegung der Stützebene und der daran befestigten Objekte in Z-Richtung.

Als schief verlaufende Stützebene kann insbesondere eine Schraubenform vorgesehen sein. Die Schraubenform ist somit eine besondere Ausgestaltung einer schiefen Stützebene. Die schiefe bzw. schraubenförmige Stützebene weist dieselbe Funktion auf, wie sie bereits aus der Druckschrift DE 38 44 659 C2 bekannt ist.

Über eine schief bzw. schraubenförmig verlaufende Stützebene wird eine Grobbewegung des Objekthalters über Anregung der diese stützenden Scherpiezoelemente erreicht, denn durch deren Rotation in der Stützebene wird eine Bewegung in Richtung der Symmetrieachse ausgeführt.

In einer weiteren Ausgestaltung der Erfindung weist ein Objekthalter mit einem hohlzylinderartigen Bewegungselement und Abtastnadel als ein relativ zur Probe zu bewegendes Objekt die schief verlaufende Stützebene auf.

An einem Objekthalter, der durch die Scherpiezoelemente bewegt wird, kann ein hohlzylinderartiges Piezoelement mit mindestens einer Abtastnadel befestigt sein, welches durch die Scherpiezoelemente über die ortsfeste Probe bewegt wird. Durch entsprechende Ansteuerung des hohlzylinderartigen Piezoelements, und der daraus resultierenden Feinbewegung der Abtastnadel über die Probe, wird diese analysiert und/oder bearbeitet.

Die Stützebene kann auch Teil eines so genannten Laufrings oder einer Probe sein. In letztgenanntem Fall liegen die Bewegungselemente direkt auf der Probe auf und bewegen diese in den verschiedenen Raumrichtungen. Durch eine geeignete Bewegung der Scherpiezoelemente, die die Stützebene stützen, kann auch eine Grobbewegung der Stützebene in X- oder Y-Richtung mittels Trägheitstranslation erreicht werden.

In einer weiteren vorteilhaften Ausgestaltung der Erfindung, weist der Nanomanipulator mehr als eine Stützebene auf.

Durch Scherpiezoelemente für verschiedene, in Symmetrieachse unterschiedlicher Höhe angeordneter Stützebenen wird erzielt, dass die Gesamthöhe des Nanomanipulators wesentlich kleiner ist, als dies aus dem Stand der Technik durch hohlzylinderartige Bewegungselemente als Stützelemente bekannt ist. Dies führt vorteilhaft zu höheren Eigenfrequenzen des Nanomanipulators.

Es ist möglich, mehrere Objekthalter, an denen je ein oder mehrere hohlzylinderartige Bewegungselemente befestigt sind, in unterschiedlicher Höhe der Symmetrieachse vorzusehen. Jedes hohlzylinderartige Bewegungselement weist mindestens eine Abtastnadel für die Probe auf. Dadurch werden Mehrpunktmessungen ermöglicht.

Dabei können besonders vorteilhaft mehrere Objekthalter eine schraubenförmig verlaufende Stützebene aufweisen. Dann werden in X- und Y- Richtung und in Richtung der Symmetrieachse unabhängig voneinander bewegbare Abtastnadeln über die Probe geführt.

Im Nanomanipulator können jeweils die Bewegungsabläufe zweier Stützebenen einander zugeordnet sein. Beispielsweise kann zu je einer schief bzw. schraubenförmig verlaufenden Stützebene zur Grobbewegung nur in Richtung der Symmetrieachse, in Symmetrieachse versetzt eine planare Stützebene zur Ausführung von Grobbewegungen ausschließlich in X- und Y-Richtung zugeordnet sein.

Die planare Stützebene kann Teil eines Laufrings sein, welcher durch seine ebene Ausgestaltung zur Positionierung eines Objekthalters in der X- und Y-Richtung verwendet wird. Hierzu können Bewegungselemente mit Scherpiezoelementen auf dem Laufring zur Stützung der schief bzw. schraubenförmig verlaufenden Stützebene angeordnet. Eine Bewegung der planaren Stützebene bedingt dann eine geführte Bewegung der schief verlaufenden Stützebene.

Sofern der Nanomanipulator sowohl eine schief bzw. schraubenförmig verlaufende Stützebene und eine planare Stützebene aufweist, wird besonders vorteilhaft eine Entkopplung der Bewegung des Objektes in X- und Y-Richtung durch die planare Stützebene von der Bewegung in Symmetrieachse durch die schief bzw. schraubenförmig verlaufende Stützebene ermöglicht. Hierzu werden verschiedenartige Scherpiezoelemente, die diese Ebenen stützen, verwendet.

Eine Stützebene weist die Öffnung, z. B. in Form eines Kreises oder einer Ellipse auf. Durch die Öffnung wird zumindest ein hohlzylinderartiges Bewegungselement mit Abtastnadel bewegt. Die Öffnung ist so bemessen, dass darin die Bewegung zumindest eines hohlzylinderartigen Bewegungselementes in X- und Y-Richtung möglich ist.

Es ist möglich, die Öffnung so zu bemessen, dass darin eine weitere Stützebene in allen Raumrichtungen bewegt werden kann. Es können in einer Öffnung einer Stützebene zusätzlich zu den hohlzylinderartigen Bewegungselementen weitere, insbesondere schraubenförmige, Stützebenen angeordnet sein bzw. bewegt werden. Es werden auf diese Weise vorteilhaft mehrere Stützebenen in einer einzigen Ebene senkrecht zur Symmetrieachse des Nanomanipulators angeordnet. Dadurch wird der zur Verfügung stehende Raum im Nanomanipulator bei kompakter Bauweise optimal genutzt und die Eigenfrequenz erhöht.

Die Stützebenen können V-Nuten aufweisen, in denen die halbkugelförmigen Auflagen der Scherpiezoelemente bewegt werden. Die halbkugelförmigen Auflagen der Bewegungselemente liegen dann vorteilhaft in einer V-Nut auf. In einer schraubenförmig verlaufenden Stützebene werden mittels einer V-Nut die halbkugelförmigen Auflageflächen der Scherpiezoelemente sicher geführt.

Diese Maßnahmen für sich alleine bewirken ebenfalls, dass der Nanomanipulator unempfindlicher gegenüber Vibrationen von außen ist. Die schraubenförmig verlaufende Stützebene ist in diesem Fall Teil eines Objekthalters, an dem ein hohlzylinderartiges Bewegungselement mit Abtastnadel befestigt ist. Durch die V-Nut wird besonders vorteilhaft bewirkt, dass eine Bewegung der Abtastnadel durch Rotation des Objekthalters ausschließlich in Richtung der Symmetrieachse, das heißt ohne eine Bewegungskomponente in der X- und Y-Richtung erfolgt. Auf diese Weise werden Bewegungen in X- und Y-Richtung von der in der Symmetrieachse entkoppelt.

Es ist möglich, die Bewegungselemente auf einer Stützebene zur Abstützung einer weiteren Stützebene anzuordnen.
Auf diese Weise können besonders vorteilhaft Stützebenen durch die Bewegung einer in Symmetrieachse darunter gelegenen Stützebene geführt werden.

Die auf einem Laufring mit Öffnung angeordneten Bewegungselemente stützen eine gegebenenfalls schraubenförmig verlaufende Stützebene. Diese Bewegungselemente können Scherpiezoelemente umfassen, die nur in einer Richtung tangential zur V-Nut ansteuerbar sind. Die Bewegungsrichtung dieser Bewegungselemente ist demnach tangential zur V-Nut im Objekthalter der schraubenförmig verlaufenden Stützebene ausgerichtet, und führt, bei entsprechender Ansteuerung, zu einer geführten Rotation des Objekthalters. Durch die schraubenförmig ausgeführten Auflageflächen der Stützebene wird durch die Rotation des Objekthalters dessen Bewegung in Richtung der Symmetrieachse bewirkt.

Besonders vorteilhaft wird durch die Kombination aus schief verlaufender Stützebene mit V-Nut und einer dieser zugeordneten planaren Stützebene in einer in darunter gelegenen Ebene des Nanomanipulators die Grobbewegung in X- und Y-Richtung über die Scherpiezoelemente des planaren Laufrings von der Grobewegung des Objekts in Richtung der Symmetrieachse durch die Scherpiezoelemente des Objekthalters mit schief oder schraubenförmig verlaufender Stützebene entkoppelt. Der Laufring mit planarer Stützebene wird durch die diesen abstützenden Scherpiezoelemente in X- und Y-Richtung bewegt. Die in der Symmetrieachse darüber angeordnete schief, insbesondere schraubenförmig verlaufende Stützebene im Objekthalter wird durch weitere Scherpiezoelemente, welche auf der planaren Stützebene angeordnet sind, gestützt. Der Laufring weist die zentral angeordnete Öffnung auf, durch die ein hohlzylinderartiges Bewegungselement mit Abtastnadel am Objekthalter durchgeführt wird bzw. bewegbar ist.

Auch bei dieser Ausführung mit versetzten Stützebenen ist eine Anordnung aus mehreren Objekthaltern und hohlzylinderartigen Bewegungselementen, möglich. In diesem Fall, weisen mindestens ein Laufring und mindestens ein Objekthalter des Nanomanipulators Öffnungen auf.

Die Träger des Nanomanipulators für die Bewegungselemente sind in einer besonders vorteilhaften Ausgestaltung der Erfindung so ausgebildet, dass sie in der Symmetrieachse versetzt mehrere Stellplätze für die Bewegungselemente aufweisen. Ein Träger kann also in Symmetrieachse versetzter Richtung z. B. zwei oder noch mehr Bewegungselemente tragen, so dass in Abhängigkeit von der Anzahl der Bewegungselemente je Träger die Stützebenen im Nanomanipulator in Symmetrieachse unterschiedlicher Höhe abgestützt und bewegt werden können.

Besonders vorteilhaft werden mit erfindungsgemäßen Nanomanipulatoren Messungen des Ladungstransportes durch Nanostrukturen ermöglicht. Dazu ist es notwendig, die Nanostrukturen nicht nur mit einer, sondern mit mehreren Abtastnadeln zu kontaktieren, um den Ladungstransport durch die Nanostrukturen zu messen. Zwei Abtastnadeln stellen dabei das Minimum dar. Mit vier Abtastnadeln ist es möglich, den Ladungstransport unabhängig von Kontaktwiderständen durch eine Vierpunktmessmethode zu messen. Ein erfindungsgemäßer Nanomanipulator weist dann eine für die Messung geeignete Anzahl an Abtastnadeln an einem oder mehreren hohlzylinderartigen Bewegungselementen auf, welche an einem oder mehreren Objekthaltern angebracht sind. Bei einem Nanomanipulator mit vier Abtastnadeln kann besonders vorteilhaft die

Oberfläche des Objektes mit der Vierpunktmessmethode analysiert werden, z. B. für Messungen der Leitfähigkeit zwischen den Abtastnadeln. Die Bewegungselemente können hierfür zwar auch alle an einem einzigen Objekthalter mit entsprechender Stützebene aufliegen. Dann ist allerdings der Abstand der Abtastnadeln zueinander fest vorgegeben. Vorteilhaft wird jedes zu bewegende Objekt, bzw. jedes hohlzylinderartige Bewegungselement auf diese Weise unabhängig voneinander und in X- und Y-Richtung entkoppelt von der Bewegung in der Symmetrieachse bewegt. Erst durch die Verwendung von Scherpiezoelementen ist es möglich, den vorhandenen Raum vollständig zu nutzen und gleichzeitig gegen Vibrationen zu schützen.

Die hohlzylinderartigen Bewegungselemente mit Abtastnadeln werden vorteilhaft exzentrisch an dem oder den Objekthaltern mit Stützebenen befestigt. Diese Maßnahme für sich allein bewirkt vorteilhaft eine bessere Aufteilung des im Nanomanipulator vorhandenen Raums.

Es ist möglich, mehrere scherpiezoelektrisch verstellbare keramische Schichten zwecks größerer Auslenkung axial übereinander zu stapeln und an Stelle eines röhrenförmigen Bewegungselements zu verwenden.

Die zu untersuchende Probe kann in einer Grundplatte an der Basis des Nanomanipulators in einem Probenhalter angeordnet sein. Es ist aber auch möglich, die Probe oberhalb der am röhrenförmigen Bewegungselement fixierten Abtastnadel im Nanomanipulator anzuordnen. Es ist auch möglich, die zu untersuchende Probe ortsfest im Nanomanipulator oberhalb eines an einem durch Bewegungselemente bewegbaren Objekthalters mit einem daran befestigten hohlzylinderartigen Bewegungselement mit Abtastnadel anzuordnen.

Der Nanomanipulator oder der Probenhalter hiervon kann vorteilhaft mit Mitteln zur Kühlung versehen sein, um Messungen bei tiefen Temperaturen zu ermöglichen.

Der Nanomanipulator kann vorteilhaft Teil eines Scanning Tunneling Microscops (STM) ) oder Rasterkraftmikroskops sein.

Derartige Anordnungen können in einem Kryostaten angeordnet sein, um Analysen bei sehr tiefen Temperaturen zu ermöglichen.

Im Weiteren wird die Erfindung an Hand von Ausführungsbeispielen und den beigefügten Figuren näher beschrieben. Gleiche Bezugszeichen in den Figuren bezeichnen identische Bauteile.

Jede Stützebene des Nanomanipulators wird über drei Bewegungselemente abgestützt und gegebenenfalls relativ zu einer Bearbeitungs- oder Analyseposition bewegt. Jedes einzelne Bewegungselement umfasst für die Mikrobewegung eines Objektes die Scherpiezoelemente. Jedes Bewegungselement weist neben einem Scherpiezoelement 2, 3, 32, 33 und so weiter, einen Magneten 2a, 2a', 3a, 32a, 33a, 33a' und so weiter, insbesondere einen Magneten aus einem Selten-Erde-Material auf, der fest mit der Schichtenfolge der Scherpiezoelemente verbunden ist. Auf den Magneten werden die halbkugelförmigen Auflagen 2b, 2b', 3b, 32b, 33b und so weiter aus Stahl befestigt.

Die Bewegungselemente sind zum Teil auf Grund der Darstellungsweise in den Figuren nicht oder nicht vollständig erkennbar bzw. nicht mit Bezugszeichen versehen worden.

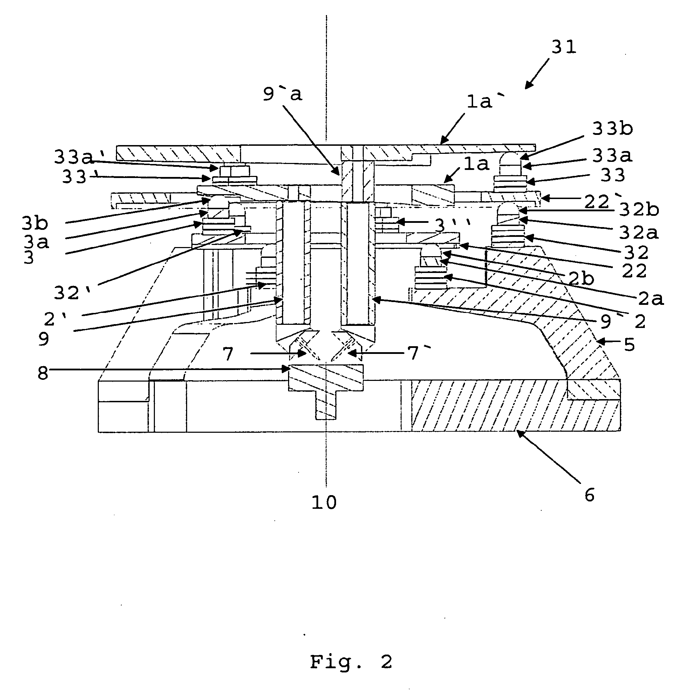

Jedes Bewegungselement weist Kontakte zur Anregung auf. Die Kontakte sind an den Kontaktschichten der Bewegungselemente angeordnet. Die Kontakte sind durch die von den Schichträndem fortführenden kurzen Linien angedeutet, z. B. am Bewegungselement 2' in der Fig. 2. Nur an diesem Scherpiezoelement sind alle drei Kontakte eingezeichnet.

Durch eine 90 Grad Versetzung der beiden piezoelektrisch verstellbaren Schichten zueinander und durch Anlegen einer geeigneten Polarität der Spannung zwischen den jeweils äußeren zu der zwischen den piezoelektrisch verstellbaren Schichten angeordneten Kontaktschicht werden zielgerichtete Verformungen in X- und Y-Richtung der piezoelektrisch verstellbaren Schichten gegenüber dem jeweils isolierenden ortsfesten Untergrund der Basis- bzw. Deckplatte mittels longitudinalen Schereffekt ermöglicht. Je drei Kontakte je Bewegungselement sind an den Kontaktschichten dieser Bewegungselemente angeordnet und führen zwecks Anregung der piezoelektrisch verstellbaren Schichten zu den Elektroden (nicht dargestellt).

Hierzu bedarf es der Regelung der Spannungsverläufe, um eine Abtastnadel an einem röhrenförmigen Bewegungselement über den Objekthalter 1a, 1a' und über die Bewegungselemente in jeder Richtung zu bewegen. Makrobewegungen werden durch schrittweise Addition von Mikrobewegungen auch senkrecht zur Bearbeitungs- oder Analyse-Ebene einer im Fuß des Nanomanipulators angeordneten Probe 8 erreicht.

Jedes der Scherpiezoelemente 2, 2', 2" bzw. 32, 32', 32" weist zwei zueinander um 90 Grad versetzt angeordnete, piezoelektrisch verstellbare keramische Schichten zur Bewegung eines Objektes in X- und Y-Richtung auf. Es umfasst eine aufeinander folgende Schichtenfolge aus isolierender Keramik als Basisplatte, Kontaktschicht, erster piezoelektrisch verstellbarer keramischen Schicht, weiterer Kontaktschicht, zweiter piezoelektrisch verstellbarer keramischen Schicht, weiterer Kontaktschicht und zweiter isolierender keramischen Schicht als Deckplatte für die zweite piezoelektrisch verstellbare Schicht. Da die Kontaktschichten aufgedampft und entsprechend sehr dünn sind, ist in den Figuren für jedes Scherpiezoelement eine Schichtenfolge aus vier Schichten dargestellt. Jede piezoelektrisch verstellbare Schicht wird somit von zwei Kontaktschichten auf der Ober- und Unterseite kontaktiert.

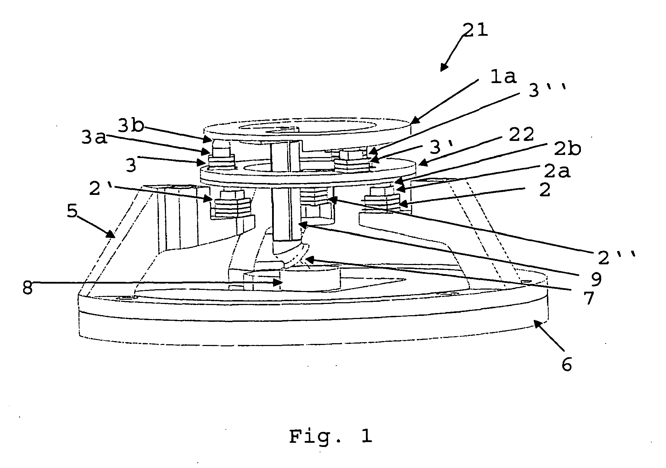

Die Schichtenfolge der Scherpiezoelemente 3, 3', 3" bzw. 33, 33', 33" (Fig. 1 bis 4) arbeitet nur in Richtung der Symmetrieachse und setzt sich wie folgt zusammen. Als Basisplatte dient eine isolierende Keramik, darauf angeordnet ist eine Kontaktschicht, wiederum darauf angeordnet ist eine piezoelektrisch verstellbare keramische Schicht, auf der wiederum eine Kontaktschicht angeordnet ist. Eine isolierende keramische Schicht dient als Deckplatte bzw. Abschluss der Schichtenfolge. Diese Scherpiezoelemente werden in den gezeigten Nanomanipulatoren verwendet, um Bewegungen einer schraubenförmigen Stützebene auszuführen.

Die Objekthalter 1a und 1 a' weisen für die halbkugelförmigen Auflagen der Scherpiezoelemente eine schraubenförmig verlaufende Stützebene in ihrer Unterseite auf. Die schraubenförmig verlaufende Stützebene besteht aus drei Abschnitten. Die Stützebene ist Teil der Objekthalter 1a und 1a'. An den Objekthaltern 1a und 1a' ist je ein hohlzylinderartiges Bewegungselement 9, 9' mit je einer hängenden Abtastnadel 7, 7' fest verbunden. Da jeder Objekthalter 1a und 1a' durch drei Bewegungselemente abgestützt wird, werden Relativbewegungen über eine Verformung der Bewegungselemente nach deren Anregung durch Trägheitstranslation und Ausführung einer Grobbewegung zwischen Abtastnadel 7, 7` und Probe 8 ausgeführt.

In den Ausführungsbeispielen sind die drei Abschnitte der schraubenförmig verlaufenden Stützebene auf Grund der Darstellungsweise nicht alle erkennbar. Die Schraubenflächen weisen jeweils eine gleiche Steigung von 0,5 mm je Abschnitt auf. Die Steigung ist so gewählt, dass auch bei

Relativbewegungen zwischen dem Objekthalter 1a, 1a' und den piezoelektrisch erregbaren Scherpiezoelementen eine ausreichende Haftung zwischen den halbkugelförmigen Auflagen der Bewegungselemente und der Oberfläche der schraubenförmig schiefen Stützebene gegeben ist. Die Bewegungselemente dürfen auf dem Objekthalter 1a und 1a' in Ruhe nicht rutschen. Darüber hinaus ist für die Wahl der Steigung die Auslenkung der Bewegungselemente zu berücksichtigen. Jeder Abschnitt einer Stützebene wird demgemäss von je einem Bewegungselement abgestützt.

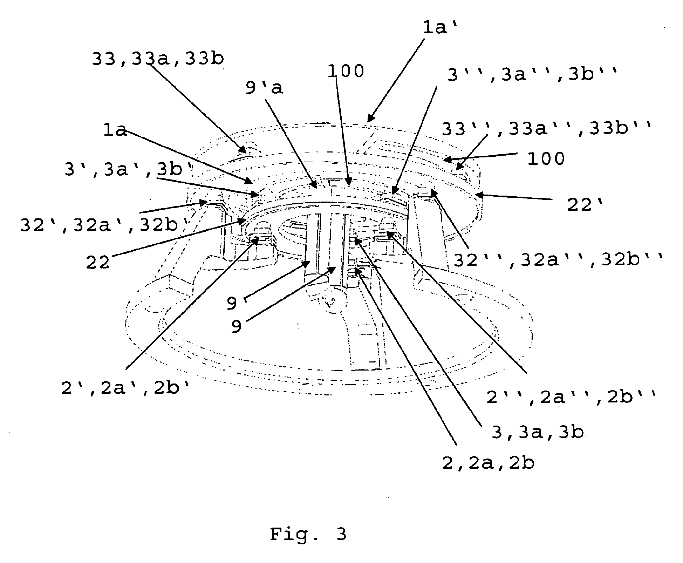

Die Objekthalter 1a, 1a' bzw. deren Stützebenen sind in den Ausführungsbeispielen der Fig. 1 und 2 und 4 den veränderten Anforderungen entsprechend angepasst. Sie bestehen weiterhin aus drei Abschnitten der gleichen Steigung von 0,5 mm je Abschnitt. Zwei dieser Abschnitte sind gleich ausgeführt. Hierzu sind sie mit einer radial verlaufenden V-Nut 100, wie in Fig. 3 dargestellt, zur Aufnahme der halbkugelförmigen Auflagen in der Unterseite des Objekthalters versehen. Zum Ausgleich von möglichen, unterschiedlichen Temperaturausdehnungen der Materialien ist der dritte Abschnitt der Stützebene ohne eine V-Nut ausgeführt. Eine in der Höhe versetzte Anordnung ist zum Ausgleich der Eintauchtiefe der halbkugelförmigen Auflagen in die V-Nuten erforderlich. Durch die veränderte Ausführung der Objekthalter 1a, 1a' und die tangential zur V-Nut im Objekthalter ausgerichtete Bewegungsrichtung der Bewegungselemente 3, 3',3", 33, 33',33" ist bei entsprechender Anregung der Bewegungselemente eine geführte Rotation des Objekthalters ohne Translationsbewegung möglich. Über die hohlzylinderartigen Bewegungselemente 9, 9' ist eine Bewegung der Abtastspitze 7, 7' in der Symmetrieachse zu erreichen.

Ausführungsbeispiel 1:
In Fig. 1 ist in Seitenaufsicht der Nanomanipulator 21 gezeigt, mit dem Bewegungen der Abtastnadel 7 über der Probe 8 in der X- und Y-Richtung von Bewegungen in der

Richtung der Symmetrieachse entkoppelt sind. Die Entkopplung wird durch die Verwendung eines Ringpaars 1a, 22 erzielt. Der Laufring 22 mit planarer Stützebene dient zur Trägheitstranslation in X- und Y-Richtung. Dem Laufring 22 ist der Objekthalter 1a zugeordnet, der durch den Laufring 22 geführt wird. Objekthalter 1a weist eine schraubenförmig verlaufende Stützebene für die Trägheitsrotation, das heißt zur vertikalen Bewegung in Richtung der Symmetrieachse, auf.

Der planare Laufring 22 weist eine große Zentralöffnung auf, durch die das am Objekthalter 1a befestigte hohlzylinderartige Bewegungselement 9 hindurch geführt und bewegbar ist. Der Objekthalter 1a weist eine schraubenförmig verlaufende Stützebene auf. Zusätzlich ist hier aber eine V-Nut an der Unterseite des Objekthalters 1 a in zwei der drei Stützebenen vorgesehen, in denen die halbkugelförmigen Auflagen 2b und so weiter der Bewegungselemente gelagert sind. Die dritte Stützebene ist ohne V-Nut ausgeführt, um bei unterschiedlichen Temperaturausdehnungen ein Verklemmen zu verhindern. Die V-Nut in der Unterseite des Objekthalters 1a liegt also auf den halbkugelförmigen Auflagen 2b und so weiter, auf. Auf Grund der Darstellungsweise in Seitenaufsicht ist die V-Nut nicht erkennbar. Die halbkugelförmigen Auflagen der Bewegungselemente mit Magneten und die V-Nut des Objekthalters 1a führen über die Schwerkraft und das magnetische Material des Objekthalters für sich genommen schon zu einer stabilen Lagerung des Objekthalters 1a, der für Vibrationen von außen unempfindlich ist. Die V-Nut schließt eine seitliche Translationsbewegung in X- und Y-Richtung bei Verformung der in ihr gelagerten Bewegungselemente aus. Eine ausschließlich vertikale Bewegung der Abtastnadel 7 in Richtung der Symmetrieachse während der Rotation ist dadurch gewährleistet.

Die Scherpiezoelemente zur Bewegung des Objekthalters 1a sind auf dem Laufring 22 angeordnet. Der Objekthalter 1a wird bei Translationsbewegung des Laufrings 22 durch diesen geführt. Die Anregung und Verformung der auf den Trägern 5 angeordneten Scherpiezoelementen 2, 2' und 2" führt zu einer Translationsbewegung des Laufrings 22. Da die Scherpiezoelemente 3, 3` und 3" der entsprechenden Bewegungselemente auf dem Laufring 22 angeordnet sind, wird der Objekthalter 1 a samt hohlzylinderartigen Bewegungselement 9 und Abtastnadel 7 durch den bewegten Laufring 22 in X- und Y-Richtung über die Oberfläche der Probe 8 geführt bzw. bewegt. Dabei tritt keine Veränderung der Z-Koordinate in Richtung der Symmetrieachse der Abtastnadel 7 auf.

Das hohlzylinderartige Bewegungselement 9 ist exzentrisch im Nanomanipulator 21 angeordnet. Eine Rotation des Objekthalters 1a tritt durch die Anregung der Scherpiezoelemente 3, 3` und 3" in der schraubenförmig verlaufenden Stützebene mit V-Nut auf. Die Bewegung des hohlzylinderartigen Bewegungselementes 9 mit der Abtastspitze 7 wird nur in Richtung der Symmetrieachse ausgeführt.

Die Abtastnadel 7 ist vorteilhaft schief am unteren Ende des hohlzylinderartigen Bewegungselements 9 befestigt. Die Abtastnadel 7 ist dadurch in einem Winkel kleiner als 90° auf die Oberfläche der Probe 8 gerichtet. Dadurch wird vorteilhaft bewirkt, dass in einem insgesamt durch Verwendung von Scherpiezoelementen kleinen zur Verfügung stehenden Raum mehrere hohlzylinderartige Bewegungselemente angeordnet werden können, die zusammen die Oberfläche der Probe 8 abrastem. Dies ist insbesondere für Leitfähigkeitsmessungen in Nanometerstrukturen wünschenswert.

Ein Vorteil der in Fig. 1 gezeigten Anordnung besteht in der Entkopplung der Bewegungen in X- und Y-Richtung von der in Richtung der Symmetrieachse. Bei Verwendung von nur einem Objekthalter, führen horizontale Bewegungen auch zu einer Veränderung der Höhe des Zentrums des Objekthalters. Ebenso führen Änderungen der Höhe zu einer Translationsbewegung des Objekthalters , und damit der Abtastnadel 7. Diese nachteilige Kopplung von horizontaler und vertikaler Bewegung wird durch das Ringpaar mit Verwendung eines flachen Laufringes 22 und eines Objekthalters 1a mit Führungen in den schraubenförmig verlaufenden Stützebenen beseitigt, s. Fig. 1. Der flache Laufring 22 mit planarer Stützebene bewegt sich also ausschließlich horizontal. Der Objekthalter bewegt sich ausschließlich in Symmetrieachse vertikaler Richtung.

Ausführungsbeispiel 2:
Fig. 2 zeigt im Querschnitt einen Nanomanipulator 31 mit zwei planaren Laufringen 22, 22', welche je einen Objekthalter 1a, 1a' führen. Fig. 3 zeigt denselben Nanomanipulator in Aufsicht von schräg unten.

Für die Bewegungsabläufe in X- und Y- sowie der Richtung der Symmetrieachse ist dem Laufring 22 der Objekthalter 1a und dem Laufring 22' der Objekthalter 1a' zugeordnet. Die mit Fig. 1 übereinstimmenden Bezugszeichen bezeichnen die gleichen Bauteile mit identischer Funktion. In diesem Ausführungsbeispiel sind die Bewegungen beider Objekthalter 1a, 1a' in X- und Y-Richtung von der in Richtung der Symmetrieachse entkoppelt, so wie es für ein Ringpaar zu Ausführungsbeispiel 1 bereits beschrieben wurde.

Zusätzlich zu dem in Fig. 1 dargestellten Nanomanipulator weist der Nanomanipulator 31 ein weiteres Ringpaar, .bestehend aus Laufring 22' und Objekthalter 1a', auf. Der Objekthalter 1a' mit daran exzentrisch befestigtem hohlzylinderartigen Bewegungselement 9' und daran befindlicher Abtastnadel 7` wird über die drei Scherpiezoelemente 33, 33', 33" in Richtung der Symmetrieachse bewegt.

Von den Auflagen 33b, 33b' und 33b" ist in Fig. 2 nur die Auflage 33b sichtbar, da sie sich auf dem Schraubensegment ohne V-Nut 100 des Objekthalters 1a' in Bildebene vorne befindet. Nicht zu sehen sind in Fig. 2 die Auflagen 33b' und 33b". Diese bewegen sich in einer V-Nut an der Unterseite des Objekthalters 1a', siehe Fig. 3.
Die Scherpiezoelemente 33, 33` 33" sind als Teil der Bewegungselemente auf dem Rand des zu Objekthalter 1a' zugehörigen Laufrings 22' in ihrer Bewegungsrichtung, das heißt tangential angeordnet.

Eine Bewegung der den Laufring 22' stützenden Scherpiezoelemente 32, 32' und 32" führt zu einer Translationsbewegung des Objekthalters 1a'.

Wie zum Nanomanipulator 21 in Fig. 1 beschrieben, ist für die Bewegung der Abtastnadel 7, 7' ein hohlzylinderartiges Bewegungselement 9, 9' und ein Ringpaar bestehend aus je einer schraubenförmig verlaufenden Stützebene in den Objekthaltern 1a, 1a' und je ein flacher Laufring 22, 22' mit planarer Stützebene bereitgestellt. Jedes hohlzylinderartige Bewegungselement 9, 9` wird hierdurch unabhängig voneinander über die Probe 8 bewegt.

Erst durch den erfindungsgemäßen Aufbau mit Scherpiezoelementen wird dies ermöglicht, da die Bauweise wesentlich kompakter und kleiner ist, und die Verwendung je zweier Stützebenen je hohlzylinderartiges Bewegungselement mit je einer Abtastnadel erlaubt. Da der Objekthalter 1a mit dem daran befestigtem hohlzylinderartigen Bewegungselement 9 in der Zentralöffnung von Laufring 22' angeordnet ist, wird eine besonders kompakte Bauweise realisiert. Dies ist bei Verwendung hohlzylinderartiger Bewegungselemente an Stelle der Scherpiezoelemente nicht möglich.

Beide Ringpaare weisen je einen flachen Laufring 22, 22' mit planarer Stützebene zur Trägheitstranslation in ausschließlich X und Y-Richtung, und einen durch diese geführten Objekthalter 1 a, 1a' mit schraubenförmig verlaufender Stützebene und V-Nut für die Trägheitsrotation, das heißt zur vertikalen Bewegung in Richtung der Symmetrieachse, auf.

In einem insgesamt durch Verwendung von Scherpiezoelementen kleinen zur Verfügung stehenden Raum, werden auf diese Weise mehrere hohlzylinderartige Bewegungselemente angeordnet, die gemeinsam eine Oberfläche des Objekts 8 abrastern können. Dies ist insbesondere für Leitfähigkeitsmessungen in kleinsten Nanometer-Strukturen, wie Transistoren wünschenswert.

Beide hohlzylinderartigen Bewegungselemente 9, 9' sind exzentrisch an den zugehörigen Objekthaltern befestigt. An jedem Bewegungselement 9, 9' ist eine Abtastnadel 7, 7' schief angebracht, derart, dass die freien Enden der Abtastnadeln auf der Symmetrieachse 10 des Nanomanipulators liegen, s. Fig. 2. Dadurch wird gewährleistet, dass die Abtastnadeln mit sehr geringem Abstand von weniger als 100 Nanometern zueinander geführt werden können.

Die Ringpaare 1a, 22 und 1a', 22' sind frei gegeneinander verschiebbar.

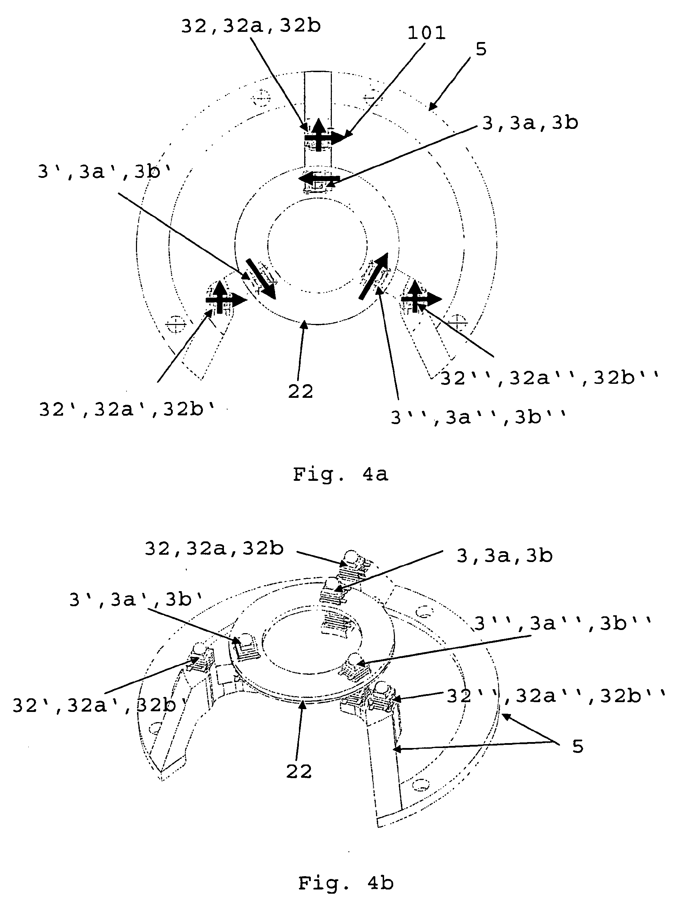

Die Figur 4a verdeutlicht in Aufsicht die Bewegungsrichtungen der Scherpiezoelemente in Fig. 2 durch fett markierte Pfeile 101. Nur einer der Pfeile ist durch das Bezugszeichen 101 markiert. Eine Aufsicht von schräg oben der in Fig. 4a gezeigten Anordnung ist der Fig. 4b entnehmbar.
Die Scherpiezoelemente 32, 32', 32" sind auf einem oberen Stellplatz der Träger 5 angeordnet und stützen bzw. bewegen den Laufring 22'. Die Scherpiezoelemente 3, 3', 3" sind auf dem Laufring 22 angeordnet und stützen bzw. bewegen Objekthalter 1a. Analog wird die Bewegung der Scherpiezoelemente für Laufring 22 und Objekthalter 1a' ausgeführt.
Die Translationsbewegung erfolgt durch drei Bewegungselemente mit jeweils in X- und Y-Richtung beweglichen Scherpiezoelementen 32, 32' und 32" bzw. 2, 2', 2" in Fig. 1. Diese Bewegungselemente sind durch die Träger 5 mit der Grundplatte 6 verbunden. Der jeweils darüber angeordnete Objekthalter 1a, 1a' führt gegenüber dem unteren Laufring 22, 22' eine geführte Rotation aus, da die zugehörenden Bewegungselemente mit den Scherpiezoelementen 3, 3', 3" bzw. 33, 33', 33", siehe Fig. 3 nur tangential bewegbar sind. Die Anregung der Scherpiezoelemente erfolgt durch einen Sägezahnimpuls, welche mittels Trägheitsantrieb die Bewegung von planarem Laufring und Objekthalter initiiert.

Fig. 4b zeigt die Anordnung der Scherpiezoelemente in Aufsicht von schräg oben betrachtet. Stellplätze in unterschiedlicher Höhe sind in den Trägern 5 angeordnet, und ermöglichen die kompakte Bauweise des Nanomanipulators.

Mit einem Nanomanipulator wie in Ausführungsbeispiel 2 und den Fig. 2 bis 4 beschrieben, konnte die unabhängige Bewegung der einzelnen Objekthalter und Laufringe bereits gezeigt werden. Laterale Bewegungen im Bereich 100 µm/s bis einige nm/s sind durch entsprechende Ansteuerung der Scherpiezoelemente möglich. Bei der vertikalen Geschwindigkeit sind mindestens Werte zwischen 1µm/s und wenigen nm/s erreichbar.

Die hohlzylinderartigen Bewegungselemente 9, 9' in den Ausführungsbeispielen sind identisch. Lediglich im zweiten Ausführungsbeispiel wird das Bewegungselement 9' durch das Verbindungsteil 9'a an den Objekthalter 1a' befestigt, um es auf diese Weise zu verlängern.

Ausführungsbeispiel 3:
In Erweiterung der in Fig. 2 gezeigten Kopplung von zwei Paaren von Objekthaltern und Laufringen können vier Paare aus Objekthaltern mit schraubenförmig verlaufender Stützebene und Laufringen mit planarer Stützebene miteinander in einem Nanomanipulator angeordnet werden. Auf diese Weise ist es möglich, vier hohlzylinderartige Bewegungselemente an vier Objekthaltern für eine Vier-Punkt-Messung bereit zu stellen.

Beispiel:
Es ist denkbar, eine Vereinfachung des Nanomanipulators in Ausführungsbeispiel 3 vorzusehen. Hierzu werden vier Objekthalter mit vier schraubenförmig verlaufenden Stützebenen bewegt. Die Scherpiezoelemente, welche eine schraubenförmig verlaufende Stützebene abstützen, sind auf drei Trägern axial in unterschiedlicher Höhe befestigt. Somit sind alle vier schraubenförmig verlaufende Stützebenen unabhängig voneinander bewegbar. Auf die Verwendung von Laufringen mit planaren Stützebenen wird verzichtet.

Dadurch wird auf eine Entkopplung der X- und Y-Bewegung von der Bewegung in Symmetrieachse zu Gunsten einer höheren Kompaktheit verzichtet. Um vier Objekthalter zu bewegen sind lediglich vier Stützebenen nötig, nicht acht, wie im Ausführungsbeispiel 3. Diese weisen Öffnungen auf, wie für Ausführungsbeispiel 1 und 2 beschrieben.

Für alle Ausführungsbeispiele ist eine abgeänderte Ausführungsform denkbar, bei der die jeweiligen Laufringe und Objekthalter im unteren Bereich nahe der Grundplatte des Nanomanipulators angeordnet sind. Die hohlzylinderartigen Bewegungselemente sind dann nicht hängend, sondern emporragend an den Objekthaltern befestigt. Eine zu untersuchende Probe ist oberhalb der hohlzylinderartigen Bewegungselemente mit Abtastnadel ortsfest angebracht.

In einer weiteren Ausführungsform sind die hohlzylinderartigen Bewegungselemente 9, 9' durch Scherpiezoelemente mit Anregungsmöglichkeit in X-, Y- und Z-Richtung zu ersetzen. Auch diese Änderung kann für alle Ausführungsbeispiele gelten.

In den Ausführungsbeispielen kann das dargestellte hohlzylinderartige Bewegungselement auch gegen ein Bewegungselement mit mehreren, übereinander angeordneten Scherpiezoelementen ausgetauscht werden. Der Nanomanipulator umfasst dann Bewegungselemente mit jeweils mehreren Scherpiezoelementen.

In den Ausführungsbeispielen ist die Abtastnadel am Objekthalter mit schraubenförmig verlaufender Stützebene befestigt und die Probe 8 unterhalb der sich bewegenden Spitze 7 angeordnet. Eine hierzu entgegensetzte Anordnung ist ebenfalls für alle Ausführungsbeispiele möglich. Dann wird die zu untersuchende Probe in einem Objekthalter mit schief verlaufender Stützebene über eine oder mehrere ortsfeste Abtastnadeln bewegt. Probe 8 und das hohlzylinderartige Bewegungselement 9, 9' mit Abtastnadel 7, 7' wären in den Figuren miteinander vertauscht.

Es ist weiterhin möglich, dass die Bewegungselemente mit den Scherpiezoelementen 2, 2', 2" direkt auf einem zu untersuchenden Objekt aufliegen, welches sodann durch die Scherpiezoelemente über eine oder mehrere ortsfeste Abtastnadeln bewegt wird. In diesem Fall kann auf einen Objekthalter verzichtet werden.

Die in den Ausführungsbeispielen gezeigten Nanomanipulatoren führen über das Zusammenwirken kompakter Scherpiezoelemente zur Bildung hoher Eigenfrequenzen der Nanomanipulatoren, dem Einfluss des Magneten über die magnetischen halbkugelförmige Auflagen auf den Objekthalter sowie der Anordnung aus je halbkugelförmigen Auflagen in einer V-Nut der Stützebene im Objekthalter unabhängig zu einer weitgehend vibrationsunempfindlichen Analyse oder Bearbeitung einer Probe, mittels Relativbewegung zwischen Abtastnadeln und Probe über die Scherpiezoelemente.

### Bezugszeichenliste:

- 11, 21, 31: Nanomanipulator
- 1a, 1a': Objekthalter mit schiefer Stützebene
- 1a, 1a': Objekthalter mit V-Nuten
- 2, 2', 2": Scherpiezoelemente für Objekthalter 1 bzw. Laufring 22
- 2a, 2a': Magnete zur Ankopplung von Objekthalter 1 und Laufring 22
- 2b, 2b': halbkugelförmige Auflagen für Objekthalter 1 und Laufring 22
- 3, 3', 3": Scherpiezoelemente für Objekthalter 1a
- 3a: Magnet zur Ankopplung von Objekthalter 1a
- 3b: halbkugelförmige Auflage für Objekthalter 1a
- 5: Träger
- 6: Basisplatte
- 7: Abtastnadel
- 8: Probe
- 9, 9': hohlzylinderartiges Bewegungselement
- 10: Zentralachse
- 22, 22': Laufring
- 32, 32', 32": Scherpiezoelemente für Laufring 22'
- 32a: Magnet zur Ankopplung von Laufring 22'
- 32b: halbkugelförmige Auflage für Lauf- ring 22'
- 33, 33': Scherpiezoelemente für Objekthalter 1a'
- 33a: Magnet zur Ankopplung Objekthalter 1a'
- 33b: halbkugelförmige Auflage für Ob- jekthalter 1a'

## Patentansprüche

1. Nanomanipulator (11, 21, 31) zur Bewegung mindestens eines Objekts (7, 7', 9, 9') relativ zu einer Analyse- oder Bearbeitungsposition, wobei der Nanomanipulator umfasst:
- eine Symmetrieachse (10), die durch die Analyse- oder Bearbeitungsposition ver läuft,
- einen Objekthalter (1a) für das Objekt, wobei der Objekthalter senkrecht zur Symmetrieachse angeordnet ist und eine Stützebene aufweist,
- mehrere, den Objekthalter (1a) stützende, zur Ausführung von Bewegungen verstellbare, Scherpiezoelemente (3, 3', 3") umfassende Bewegungselemente, welche jeweils eine Auflagefläche (3b) für die Stützebene des Objekthalters aufweisen,
**dadurch gekennzeichnet, dass**
- der Nanomanipulator mindestens eine weitere, senkrecht zur Symmetrieachse angeordnete Stützebene aufweist, die von Scherpiezoelementen (2, 2', 2"; 32, 32', 32") abgestützt wird, wobei
- die weitere Stützebene eine Öffnung aufweist, die so bemessen ist, dass darin ein hohlzylinderartiges Bewegungselement (9, 9') an dem Objekthalter (1a) und / oder eine dritte Stützebene translatorisch bewegt werden kann, und
- der Objekthalter und die weitere Stützebene in unterschiedlichen Ebenen senkrecht zur Symmetrieachse (10) des Nanomanipulators angeordnet sind, wobei die Stützebene mit Öffnung (22) zwischen der Bearbeitungs- und Analyseposition und dem Obj ekthalter (1a) angeordnet ist,
- wobei die Bewegungselemente zur Abstützung des Objekthalters auf der weiteren Stützebene angeordnet sind.

2. Nanomanipulator nach Anspruch 1,
mit mindestens einem Scherpiezoelement, in dem zwei um 90 Grad zueinander versetzte piezoelektrisch anregbare Kontaktflächen angeordnet sind.

3. Nanomanipulator nach einem der vorhergehenden Ansprüche,
mit mindestens einem Scherpiezoelement mit einer einzigen piezoelektrisch anregbaren Kontaktfläche.

4. Nanomanipulator nach einem der vorhergehenden Ansprüche,
**dadurch gekennzeichnet, dass**
der Nanomanipulator Mittel zu einer voneinander unabhängigen Ansteuerung der Scherpiezoelemente aufweist.

5. Nanomanipulator nach einem der vorhergehenden Ansprüche,
**dadurch gekennzeichnet, dass**
die Bewegungselemente Bewegungen in X- und oder Y- und / oder Z- Richtung auszuführen vermögen, wobei die Z-Richtung die Richtung der Symmetrieachse ist.

6. Nanomanipulator nach einem der vorhergehenden Ansprüche,
**dadurch gekennzeichnet, dass**
dieser drei Bewegungselemente für jeweils eine Stützebene aufweist.

7. Nanomanipulator nach einem der vorhergehenden Ansprüche,
**dadurch gekennzeichnet, dass**
die Bewegungselemente eine halbkugelförmige Auflage zur Abstützung der Stützebene aufweisen.

8. Nanomanipulator nach einem der vorhergehenden Ansprüche,
**dadurch gekennzeichnet, dass**
die Bewegungselemente einen Magneten, insbesondere aus einem Selten-Erde-Material umfassen.

9. Nanomanipulator nach einem der vorhergehenden Ansprüche,
**dadurch gekennzeichnet, dass**
die Bewegungselemente auf Trägern des Nanomanipulators in unterschiedlicher Höhe der Symmetrieachse (10) angeordnet sind.

10. Nanomanipulator nach einem der vorhergehenden Ansprüche,
**dadurch gekennzeichnet, dass**
die Bewegungselemente eine schief verlaufende Stützebene abstützen.

11. Nanomanipulator nach Anspruch 10,
**gekennzeichnet durch**
eine Schraubenform als schief verlaufende Stützebene.

12. Nanomanipulator nach vorhergehendem Anspruch,
**dadurch gekennzeichnet, dass**
jedes Bewegungselement einen Abschnitt einer schraubenförmig verlaufenden Stützebene abstützt.

13. Nanomanipulator nach einem der vorhergehenden Ansprüche 11 oder 12,
**dadurch gekennzeichnet, dass**
jeder Abschnitt der schraubenförmig verlaufenden Stützebene gleich gestaltet ist.

14. Nanomanipulator nach einem der vorhergehenden Ansprüche,
**dadurch gekennzeichnet, dass**
die Stützebene Teil eines Objekthalters (1a; 1a') oder eines Laufrings (22; 22') oder einer zu untersuchenden Probe (8) ist.

15. Nanomanipulator nach einem der vorhergehenden Ansprüche,
**dadurch gekennzeichnet, dass**
die Stützebene zumindest teilweise eine V- Nut aufweist.

16. Nanomanipulator nach einem der vorhergehenden Ansprüche,
bei dem Bewegungen in der Ebene senkrecht zur Symmetrieachse von Bewegungen in der Richtung
der Symmetrieachse (10) entkoppelt sind.

17. Nanomanipulator nach einem der vorhergehenden Ansprüche,
**dadurch gekennzeichnet, dass**
an mindestens einer Stützebene mindestens ein hohlzylinderartiges Bewegungselement angeordnet ist.

18. Nanomanipulator nach vorhergehendem Anspruch,
**dadurch gekennzeichnet, dass**
an einem hohlzylinderartigen Bewegungselement die Abtastnadel (7) des Nanomanipulators befestigt ist.

19. Nanomanipulator nach einem der vorhergehenden Ansprüche,
**dadurch gekennzeichnet, dass**
Bewegungselemente (3, 3', 3") auf einer Stützebene zur Abstützung einer weiteren Stützebene angeordnet sind.

20. Nanomanipulator nach einem der vorhergehenden Ansprüche,
**dadurch gekennzeichnet, dass**
mindestens zwei Stützebenen in derselben Ebene senkrecht zur Symmetrieachse (10) des Nanomanipulators angeordnet sind.

21. Nanomanipulator nach einem der vorhergehenden Ansprüche,
**dadurch gekennzeichnet, dass**
der Nanomanipulator vier Abtastnadeln zum Analysieren und / oder Bearbeiten der Oberfläche eines zu untersuchenden Objekts aufweist.

22. Nanomanipulator nach vorhergehendem Anspruch,
**dadurch gekennzeichnet, dass**
je eine Abtastnadel an je einem hohlzylinderartigen Bewegungselement befestigt ist.

23. Nanomanipulator nach einem der vorhergehenden Ansprüche,
**dadurch gekennzeichnet, dass**
die Abtastnadel(n) in einem Winkel von kleiner als 90 Grad auf die Probe gerichtet sind.

24. Nanomanipulator nach einem der vorhergehenden Absprüche,
durch **gekennzeichnet**, dass
mindestens ein hohlzylinderartiges Bewegungselement mit Abtastnadel exzentrisch an einer Stützebene befestigt sind.

25. Nanomanipulator nach einem der vorhergehenden Ansprüche,
**dadurch gekennzeichnet, dass**
dieser Mittel zur Kühlung der Umgebung der Abtastnadel umfasst.

26. Nanomanipulator nach einem der vorhergehenden Ansprüche,
**dadurch gekennzeichnet, dass**
dieser einen Probenhalter umfasst.

27. Nanomanipulator nach einem der vorhergehenden Ansprüche,
**dadurch gekennzeichnet, dass**
der Probenhalter in einer Grundplatte im Fuß des Nanomanipulators angeordnet ist.

28. Nanomanipulator nach einem der vorhergehenden Ansprüche,
**dadurch gekennzeichnet, dass**
die Stützebene in einer Grundplatte im Fuß des Nanomanipulators angeordnet ist.

## Claims

1. Nanomanipulator (11, 21, 31) for moving at least one object (7, 7', 9, 9') relative to an analysis or machining position, in which the nanomanipulator comprises:
- an axis of symmetry (10) which runs through the analysis or machining position,
- an object holder (1a) for the object, in which the object holder is arranged perpendicular to the axis of symmetry and has a support plane,
- several shear piezoelectric elements (3, 3', 3"), which support the object holder (1a) and may be adjusted to perform movements, with these comprising moving elements which each have a seat (3b) for the support plane of the object holder,
**characterised in that**
- the nanomanipulator has at least one further support plane that is arranged perpendicular to the axis of symmetry, which is supported by shear piezoelectric elements (2, 2', 2"; 32, 32', 32"), in which
- the further support plane has an opening, which has such dimensions that a moving element (9, 9') of the hollow cylinder type may be moved translationally on the object holder (1a) and / or a support plane, and
- the object holder and the further support plane are arranged in various planes perpendicular to the axis of symmetry (10) of the nanomanipulator, in which the support plane with an opening (22) is arranged between the machining and analysis position and the object holder (1a),
- in which the moving elements for supporting the object holder are arranged on the further support plane.

2. Nanomanipulator according to claim 1
with at least one shear piezoelectric element, in which two piezoelectrically actuatable contact surfaces offset at 90 degrees to each other are arranged.

3. Nanomanipulator according to one of the foregoing claims
with at least one shear piezoelectric element with a single piezoelectrically actuatable contact surface.

4. Nanomanipulator according to one of the foregoing claims
**characterised in that**
the nanomanipulator has means for controlling the shear piezoelectric elements independently of each other.

5. Nanomanipulator according to one of the foregoing claims
**characterised in that**
the moving elements are capable of movements in the X and / or Y and / or Z direction, in which the Z direction is the direction of the axis of symmetry.

6. Nanomanipulator according to one of the foregoing claims
**characterised in that**
it has three moving elements for each support plane.

7. Nanomanipulator according to one of the foregoing claims
**characterised in that**
the moving elements have a hemispherical seat for supporting the support plane.

8. Nanomanipulator according to one of the foregoing claims
**characterised in that**
the moving elements have a magnet, particularly made of a rare earth material.

9. Nanomanipulator according to one of the foregoing claims
**characterised in that**
the moving elements are arranged on the nanomanipulator's carriers at various heights of the axis of symmetry (10).

10. Nanomanipulator according to one of the foregoing claims
**characterised in that**
the moving elements support an obliquely running support plane.

11. Nanomanipulator according to claim 10
**characterised by**
a helix as the obliquely running support plane.

12. Nanomanipulator according to the foregoing claim
**characterised in that**
each moving element supports a section of a helically running support plane.

13. Nanomanipulator according to one of the foregoing claims 11 or 12 **characterised in that**
each section of the helically running support plane is identically shaped.

14. Nanomanipulator according to one of the foregoing claims
**characterised in that**
the support plane is part of an object holder (1a; 1a') or a raceway (22; 22') or a sample to be examined (8).

15. Nanomanipulator according to one of the foregoing claims
**characterised in that**
the support plane at least partially has a V-groove.

16. Nanomanipulator according to one of the foregoing claims
in which the movements in the plane perpendicular to the axis of symmetry are decoupled from the movements in the direction of the axis of symmetry (10).

17. Nanomanipulator according to one of the foregoing claims
**characterised in that**
a moving element of the hollow cylinder type is arranged on at least one support plane.

18. Nanomanipulator according to the foregoing claim
**characterised in that**
the nanomanipulator's scanning tip (7) is fixed to a moving element of the hollow cylinder type.

19. Nanomanipulator according to one of the foregoing claims
**characterised in that**
moving elements (3, 3', 3") are arranged on a support plane so as to support a further support plane.

20. Nanomanipulator according to one of the foregoing claims
**characterised in that**
at least two support planes are arranged in the same plane perpendicular to the axis of symmetry (10) of the nanomanipulator.

21. Nanomanipulator according to one of the foregoing claims
**characterised in that**
the nanomanipulator has four scanning tips for analysing and / or machining the surface of an object to be examined.

22. Nanomanipulator according to the foregoing claim
**characterised in that**
a scanning tip is fixed to each moving element of the hollow cylinder type.

23. Nanomanipulator according to one of the foregoing claims
**characterised in that**
the scanning tip(s) is (are) directed at the sample at an angle of less than 90 degrees.

24. Nanomanipulator according to one of the foregoing claims
**characterised in that**
at least one moving element of the hollow cylinder type is eccentrically fixed to a support plane with a scanning tip.

25. Nanomanipulator according to one of the foregoing claims
**characterised in that**
this comprises means for cooling the surroundings of the scanning tip.

26. Nanomanipulator according to one of the foregoing claims
**characterised in that**
this comprises a sample holder.

27. Nanomanipulator according to one of the foregoing claims
**characterised in that**
the sample holder is arranged in a base plate at the base of the nanomanipulator.

28. Nanomanipulator according to one of the foregoing claims
**characterised in that**
the support plane is arranged in a base plate at the base of the nanomanipulator.

## Revendications

1. Nanomanipulateur (11, 21, 31) servant à déplacer au moins un objet (7, 7', 9, 9') par rapport à une position d'analyse ou d'usinage, le nanomanipulateur comportant :
- un axe de symétrie (10) qui passe par la position d'analyse ou d'usinage,
- un porte-objet (1a) pour l'objet, le porte-objet étant disposé perpendiculairement à l'axe de symétrie et présentant un plan support,
- plusieurs éléments de déplacement soutenant le porte-objet (1a), réglables pour l'exécution de déplacements, comprenant des éléments piézo de cisaillement (3, 3', 3") et présentant respectivement une surface d'appui (3b) pour le plan support du porte-objet,
**caractérisé en ce que**
- le nanomanipulateur présente au moins un autre plan support disposé perpendiculairement à l'axe de symétrie et supporté par des éléments piézo de cisaillement (2, 2', 2", 32, 32', 32"), dans lequel
- l'autre plan support présente une ouverture qui est dimensionnée de telle sorte qu'un élément de déplacement (9, 9') de type cylindre creux au niveau du porte-objet (10) et / ou un troisième plan support peut y être déplacé en translation, et
- le porte-objet et l'autre plan support sont disposés dans différents plans de manière perpendiculaire à l'axe de symétrie (10) du nanomanipulateur, le plan support avec ouverture (22) étant agencé entre la position d'usinage et d'analyse et le porte-objet (1a),
- dans lequel les éléments de déplacement servant à supporter le porte-objet sont agencés sur l'autre plan support.

2. Nanomanipulateur selon la revendication 1, comportant au moins un élément piézo de cisaillement, dans lequel sont disposés deux surfaces de contact excitables par voie piézoélectrique, décalées de 90 degrés l'une par rapport à l'autre.

3. Nanomanipulateur selon l'une quelconque des revendications précédentes,
comportant au moins un élément piézo de cisaillement avec une seule surface de contact excitable par voie piézoélectrique.

4. Nanomanipulateur selon l'une quelconque des revendications précédentes,
**caractérisé en ce que**
le nanomanipulateur présente des moyens permettant de commander les éléments piézo de cisaillement indépendamment les uns des autres.

5. Nanomanipulateur selon l'une quelconque des revendications précédentes,
**caractérisé en ce que**
les éléments de déplacement sont capables de réaliser des déplacements dans la direction des X et / ou des Y et / ou des Z, la direction des Z étant la direction de l'axe de symétrie.

6. Nanomanipulateur selon l'une quelconque des revendications précédentes,
**caractérisé en ce que**
celui-ci présente trois éléments de déplacement pour respectivement un plan support.

7. Nanomanipulateur selon l'une quelconque des revendications précédentes,
**caractérisé en ce que**
les éléments de déplacement présentent un appui semi-sphérique servant à supporter le plan support.

8. Nanomanipulateur selon l'une quelconque des revendications précédentes,
**caractérisé en ce que**
les éléments de déplacement comprennent un aimant, en particulier en terres rares.

9. Nanomanipulateur selon l'une quelconque des revendications précédentes,
**caractérisé en ce que**
les éléments de déplacement sont disposés sur des supports du nanomanipulateur à différentes hauteurs de l'axe de symétrie (10).

10. Nanomanipulateur selon l'une quelconque des revendications précédentes,
**caractérisé en ce que**
les éléments de déplacement supportent un plan support incliné.

11. Nanomanipulateur selon la revendication 10, **caractérisé par**
une forme hélicoïdale comme plan support incliné.

12. Nanomanipulateur selon la revendication précédente,
**caractérisé en ce que**
chaque élément de déplacement supporte une section d'un plan support hélicoïdal.

13. Nanomanipulateur selon l'une quelconque des revendications précédentes 11 ou 12,
**caractérisé en ce que**
chaque section du plan support hélicoïdal est réalisée de la même manière.

14. Nanomanipulateur selon l'une quelconque des revendications précédentes,
**caractérisé en ce que**
le plan support fait partie d'un porte-objet (1a ; 1a') ou d'une bague de roulement (22 ; 22') ou d'un échantillon à examiner (8).

15. Nanomanipulateur selon l'une quelconque des revendications précédentes,
**caractérisé en ce que**
le plan support présente au moins en partie une rainure en V.

16. Nanomanipulateur selon l'une quelconque des revendications précédentes,
dans lequel les déplacements dans le plan perpendiculaire à l'axe de symétrie sont découplés des déplacements dans la direction de l'axe de symétrie (10) .

17. Nanomanipulateur selon l'une quelconque des revendications précédentes,
**caractérisé en ce que**
au moins un élément de déplacement de type cylindre creux est disposé sur au moins un plan support.

18. Nanomanipulateur selon la revendication précédente,
**caractérisé en ce que**
l'aiguille de balayage (7) du nanomanipulateur est fixée sur un élément de déplacement de type cylindre creux.

19. Nanomanipulateur selon l'une quelconque des revendications précédentes,
**caractérisé en ce que**
les éléments de déplacement (3, 3', 3") sont disposés sur un plan support servant à supporter un autre plan support.

20. Nanomanipulateur selon l'une quelconque des revendications précédentes,
**caractérisé en ce que**
au moins deux plans support sont disposés dans le même plan perpendiculairement à l'axe de symétrie (10) du nanomanipulateur.

21. Nanomanipulateur selon l'une quelconque des revendications précédentes,
**caractérisé en ce que**
le nanomanipulateur présente quatre aiguilles de balayage servant à analyser et / ou à usiner la surface d'un objet à examiner.

22. Nanomanipulateur selon la revendication précédente,
**caractérisé en ce que**
respectivement une aiguille de balayage est fixée à respectivement un élément de déplacement de type cylindre creux.

23. Nanomanipulateur selon l'une quelconque des revendications précédentes,
**caractérisé en ce que**
la ou les aiguilles de balayage sont dirigées vers l'échantillon suivant un angle inférieur à 90 degrés.

24. Nanomanipulateur selon l'une quelconque des revendications précédentes,
**caractérisé en ce que**
au moins un élément de déplacement de type cylindre creux avec aiguille de balayage est fixé de manière excentrique au niveau d'un plan support.

25. Nanomanipulateur selon l'une quelconque des revendications précédentes,
**caractérisé en ce que**
celui-ci comprend des moyens de refroidissement de l'environnement de l'aiguille de balayage.

26. Nanomanipulateur selon l'une quelconque des revendications précédentes,
**caractérisé en ce que**
celui-ci comprend un porte-échantillon.

27. Nanomanipulateur selon l'une quelconque des revendications précédentes,
**caractérisé en ce que**
le porte-échantillon est agencé dans une plaque de base dans le pied du nanomanipulateur.

28. Nanomanipulateur selon l'une quelconque des revendications précédentes,
**caractérisé en ce que**
le plan support est agencé dans une plaque de base dans le pied du nanomanipulateur.
